# NEUE EUROPÄISCHE PATENTSCHRIFT

(11) **EP 2 169 186 B2**
(45) Veröffentlichungstag und Bekanntmachung des Hinweises auf die Entscheidung über den Einspruch: **01.11.2017**
(45) Hinweis auf die Patenterteilung: 06.06.2012
(21) Anmeldenummer: 09163128.3
(22) Anmeldetag: 18.06.2009
(51) Int. Cl.: F01D 25/18, F16J 15/16, F02C 6/12, F02B 39/14

(54) **Dichtungsanordnung für die Verdichterseite eines Turboladers einer Verbrennungskraftmaschine**
Sealing arrangement for the compressor side of a turbocharger of a combustion engine
Ensemble joints d'étanchéité du côté compresseur d'une turbosoufflante d'un moteur à combustion

(30) Priorität: 26.09.2008 DE 102008049250
(43) Veröffentlichungstag der Anmeldung: 31.03.2010
(73) Patentinhaber: Borgwarner Inc., Auburn Hills, Michigan 48326 (US)
(72) Erfinder: Celik, Halim, 50354 Hürth (DE); Bachmann, Kerstin, 10405 Berlin (DE); Hopp, Martin, Dr., 50858 Köln (DE); Seidel, Jawor, 52066 Aachen (DE); Klingel, Dieter, 67281 Kirchheim (DE)
(74) Vertreter: Peterreins Schley

(56) Entgegenhaltungen:
- EP-A1- 1 813 782
- JP-A- 7 217 440
- JP-U- 53 165 911
- JP-U- 59 137 331
- JP-U- 60 073 841
- JP-U- 60 100 533
- JP-U- 60 122 536
- JP-U- 62 097 368
- JP-U- 62 128 282
- JP-U- 63 156 432

## Beschreibung

Die Erfindung betrifft eine Dichtungsanordnung für die Verdichterseite eines Turboladers einer Verbrennungskraftmaschine mit einer Welle, auf der ein Verdichterrad angeordnet ist, einer Dichtungsbuchse, die auf der Welle angeordnet ist, einem Lagergehäusedeckel, der radial innerhalb des Lagergehäuses angeordnet ist, einen Verdichterraum von einem Lagergehäuseraum trennt und die Dichtungsbuchse zumindest teilweise umgibt, einem Lagerbund, der auf der Welle angeordnet ist und einem Axiallager, welches im Lagergehäuse fest angeordnet ist, wobei der radial innere Bereich des Axiallagers zwischen einer sich radial erstreckenden Wand des Lagerbundes und einer sich radial erstreckenden Wand der Dichtungsbuchse angeordnet ist, in der eine ringförmige Axialnut ausgebildet ist, die zum Lagergehäusedeckel weist und in die ein axiales Ende eines sich vom Lagergehäusedeckel axial erstreckenden Ringes ragt, an dem angrenzend zum in die Axialnut ragenden Ende eine Radialnut ausgebildet ist, sowie ein Verfahren zur Abdichtung der Verdichterseite eines Turboladers mit einer derartigen Dichtungsanordnung.

Solche Dichtungsanordnungen dienen dazu, ein Eindringen von für die Schmierung der Turboladerlagerung notwendigem Öl in das Verdichtergehäuse und somit in den Kreislauf der Verbrennungskraftmaschine zu unterbinden.

Es sind verschiedene Systeme bekannt geworden, mittels derer die Abdichtung verbessert werden soll.

In der JP 63-156432 wird eine Abdichtung für eine Verdichterseite eines Turboladers mit einer Dichtungsbuchse und einem Lagerbund beschrieben, zwischen deren sich radial erstreckende Wände ein Axiallager ragt. Bei dieser Dichtungsanordnung liegt ein Ölabweisblech gegen die Wand der Dichtungsbuchse an. Ein Eindringen von Öl zwischen Dichtungsbuchse und Lagergehäusedeckel in den Verdichterraum wird nicht zuverlässig vermieden, da dieser Spalt nicht abgedichtet ist und sich Öl am Anfang des Spaltes sammeln kann.

So wird in der DE 35 45 082 A1 ein Turbolader beschrieben, bei dem zwischen dem Axiallager und dem Lagergehäusedeckel ein Ölabweisblech im Außenbereich befestigt ist, welches einen Raum zwischen dem Lagergehäusedeckel und dem Axiallager teilt. Öl, welches am Innenumfang des Ölabweisblechs entlang in den Raum zwischen dem Lagergehäusedeckel und dem Ölabweisblech strömt, wird nach außen geschleudert und kann entlang des Lagergehäusedeckels in einen Ölsammelraum geleitet werden. Ein Teil des vom Lagergehäusedeckel tropfenden Öls wird in einer Radialnut der Dichtungsbuchse gesammelt und kann von dort in Richtung Ölsammelraum strömen. Allerdings ist diese Nut unmittelbar neben einem durch einen Kolbenring abgedichteten Spalt zwischen Lagergehäusedeckel und Dichtungsbuchse angeordnet. Insbesondere bei Stillstand des Turboladers besteht die Gefahr, dass die sich ansammelnde Ölmenge nicht direkt in der Nut aufgefangen wird, sondern in diesen Spalt tropft. Dieses Öl kann dann unter Umständen in den Verdichterraum eindringen, so dass eine geringe Leckage weiterhin möglich ist.

Zusätzlich ist aus der GB 1,045,973 eine Abdichtung für einen Turbolader bekannt, welche ohne Ölabweisblech arbeitet. Hierzu weist der Druckring eine sich axial erstreckende äußere Wand auf, in der radiale Bohrungen ausgebildet sind. Über diese Bohrungen soll Öl, welches in den Raum zwischen Lager und Lagergehäusedeckel strömt, nach außen beschleunigt werden, um so über den Lagergehäusedeckel zum Ölsammelraum gefördert werden zu können. In eine Axialnut des Druckrings ragt eine sich axial erstreckende Wand des Lagergehäusedeckels, an deren äußeren Umfang eine Nut ausgebildet ist, über die, insbesondere bei Stillstand des Turboladers, Öl gesammelt und zum Ölsammelraum abgeleitet werden soll. Ist diese Ölmenge jedoch zu groß, gelangt das Öl über den Spalt zwischen Lagergehäusedeckel und Druckring unter Umständen in den Verdichterraum.

Aus diesem Grund wird in der WO 2008/042698 A1 eine Dichtungsanordnung vorgeschlagen, bei dem in den Raum zwischen Lagergehäusedeckel und Axiallager gelangendes Öl in den radial äußeren Bereich des Lagergehäusedeckels geschleudert wird und von dort ablaufen soll. Um einen derartigen Ablauf sicherzustellen, weist der Lagergehäusedeckel eine sich axial erstreckende ringförmige Wand auf, deren axiales Ende in eine Radialnut der Dichtungsbuchse ragt. Über die zueinander weisenden drei Außenflächen der Radialnut der Dichtungsbuchse und der ringförmigen sich axial erstreckenden Wand des Lagergehäusedeckels soll in diesem Bereich eine zusätzliche Abdichtung gewährleistet werden, so dass hier mit sehr engen Toleranzen zu fertigen ist. Zusätzlich ist auch hier an der sich axial erstrekkenden ringförmigen Wand des Lagergehäusedeckels eine Radialnut ausgebildet, in der das vom Lagergehäusedeckel ablaufende Öl gesammelt werden kann. Diese Nut schließt sich unmittelbar an das in der Axialnut angeordnete axiale Ende der sich axial erstreckenden Wand der Dichtungsbuchse an. Auch hier ergibt sich das Problem, dass durch die große vorhandene Ölmenge insbesondere bei Stillstand des Turboladers gegebenenfalls Öl zwischen der äußeren Wand der Dichtungsbuchse und der ringförmigen sich axial erstreckenden Wand des Lagergehäusedeckels eindringen kann. Diese Gefahr wird zwar durch die geringen Toleranzen zwischen diesen Bauteilen vermieden, was allerdings zu einem deutlich erhöhten Verschleiß im Betrieb führt, da sich die Dichtungsbuchse mit der Welle dreht, während der Lagergehäusedeckel fest steht.

Entsprechend bestehen bei den bekannten Ausführungen die Nachteile, dass entweder eine Abdichtung des Ölraums gegenüber dem Verdichterraum nicht zuverlässig gesichert ist oder mit erhöhtem Verschleiß zu rechnen ist, wodurch wiederum Leckagen entstehen können.

Es stellt sich daher die Aufgabe, eine Dichtungsanordnung für die Verdichterseite eines Turboladers zu schaffen, welches sowohl im Betrieb als auch bei Stillstand des Turboladers ein Eindringen von Öl in den Verdichterraum über die gesamte Lebensdauer des Turboladers und in allen Betriebszuständen zuverlässig verhindert und gleichzeitig einen erhöhten Verschleiß vermeidet.

Diese Aufgabe wird durch eine Dichtungsanordnung gelöst, welches ein Ölabweisblech aufweist, dessen äußerer Umfang zumindest teilweise zwischen dem Lagergehäusedeckel und dem Axiallager festgeklemmt ist und dessen Innenumfang in eine Radialnut am äußeren Umfang der sich radial erstreckenden Wand der Dichtungsbuchse ragt sowie durch ein Verfahren gelöst, bei dem im Betrieb des Turboladers Öl aus einem Spalt zwischen dem Axiallager und der sich radial erstreckenden Wand der Dichtungsbuchse zunächst in einen Raum zwischen dem Axiallager und dem Ölabweisblech geleitet wird, ein Hauptteil des Öls durch das Ölabweisblech in einen Ölsammelraum im Lagergehäuse des Turboladers geleitet wird, ein Rest des Öls über die Radialnut zwischen dem Ölabweisblech und der Dichtungsbuchse in einen Raum zwischen dem Ölabweisblech und dem Lagergehäusedeckel strömt, der Rest des Öls nach außen in Richtung des Lagergehäusedeckels geschleudert wird und daraufhin vom Lagergehäusedekkel zur Radialnut geleitet wird, von wo aus es in den Ölsammelraum strömt.

Eine derartige Vorrichtung beziehungsweise ein derartiges Verfahren haben den Vorteil, dass der Hauptölstrom, der zwischen der Dichtungsbuchse und dem Axiallager hindurch tritt, zunächst in einem Raum zwischen dem Ölabweisblech und dem Axiallager gesammelt wird, und von dort über das Ölabweisblech abfließen kann. Die Menge des Öles, die entlang des Spaltes zwischen der Radialnut der Dichtungsbuchse und dem Innenumfang des Ölabweisblechs in den Raum zwischen dem Lagergehäusedeckel und dem Ölabweisblech strömen kann, wird auf diese Weise deutlich reduziert. Somit wird nur eine geringe Ölmenge zum radial außen liegenden Bereich des Lagergehäusedeckels geschleudert und in Richtung der Axialnut der sich axial erstreckenden Wand des Lagergehäusedeckels abgeleitet. Durch die Anordnung und Verwendung des Ölabweisblechs ist diese Menge in jedem Betriebszustand des Turboladers so gering, dass das gesamte Restöl von der Radialnut aufgenommen werden kann und von hier in Richtung des Ölsammelraumes abströmen kann. Somit kann ein Spalt zwischen dem axialen Ende des in die Axialnut der Dichtungsbuchse ragenden Ringes und der Axialnut der Dichtungsbuchse vorgesehen werden, ohne dass ein Eindringen von Öl in diesen Spalt zu erwarten ist. Gleichzeitig wird ein erhöhter Verschließ in diesem Bereich zuverlässig vermieden.

Vorzugsweise weist die Außenumfangsfläche der sich radial erstreckenden Wand der Dichtungsbuchse an einer zum Axiallager weisenden, an die Radialnut angrenzenden axialen Seite, einen geringeren Durchmesser auf als an einer zum Lagergehäusedeckel weisenden an die Radialnut angrenzenden axialen Seite. Durch diese Ausführung wird die Menge des in den Raum zwischen Lagergehäusedeckel und Ölabweisblech eindringenden Restöls zusätzlich reduziert, da ein Gefälle in Richtung des Raums zwischen Axiallager und Ölabweisblech vorhanden ist.

In einer weiterführenden Ausführungsform ist zwischen dem Innenumfang des Lagergehäusedeckels und dem Außenumfang des sich axial erstreckenden Teils der Dichtungsbuchse in zwei Nuten der Dichtungsbuchse je ein Kolbenring angeordnet. Hierdurch wird sichergestellt, dass, selbst bei einem unerwarteten Eindringen von Öl in den Spalt zwischen dem axialen Ende des in die Axialnut der Dichtungsbuchse ragenden Ringes des Lagergehäusedeckels und der Axialnut der Dichtungsbuchse, ein Ölstrom in das Verdichtergehäuse vermieden wird.

Es wird somit eine Dichtungsanordnung für die Verdichterseite eines Turboladers und ein Verfahren zur Abdichtung der Verdichterseite eines Turboladers geschaffen, mit denen ein Eindringen von Öl in den Verdichterraum des Turboladers zuverlässig in allen Betriebszuständen vermieden wird und gleichzeitig ein erhöhter Verschleiß ausgeschlossen wird.

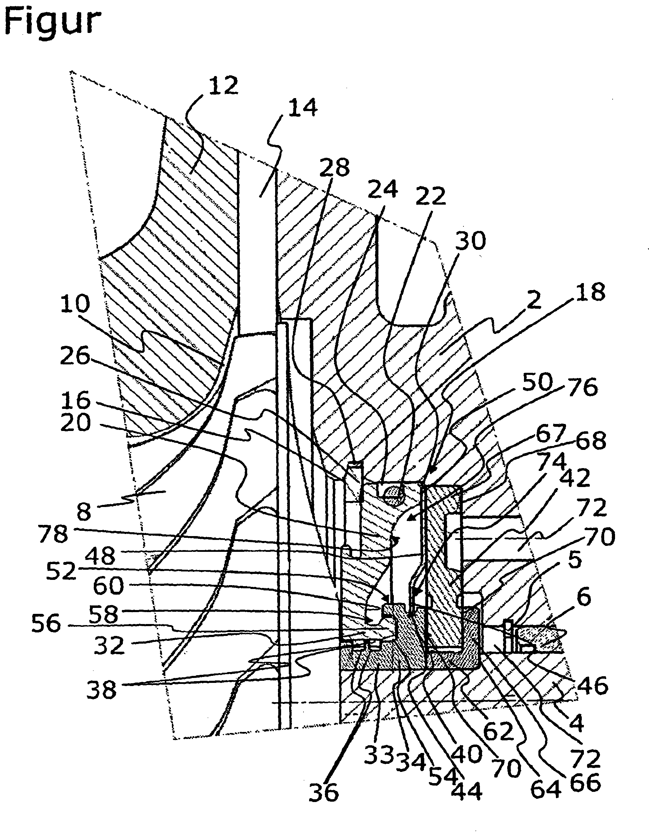

Ein Ausführungsbeispiel einer erfindungsgemäßen Dichtungsanordnung für eine Verdichterseite eines Turboladers ist in der Figur dargestellt und wird nachfolgend beschrieben.

Die Figur zeigt eine Seitenansicht eines Ausschnitts der Verdichterseite eines Turboladers mit einer erfindungsgemäßen Dichtungsanordnung in geschnittener Darstellung.

Der dargestellte Turbolader besteht aus einem Lagergehäuse 2, in dem eine Welle 4 über zwei mit Sicherungsringen 5 in ihrer Position festgelegte Radiallager 6, von denen eines in der Figur zu erkennen ist, drehbar gelagert ist. An einem Ende der Welle 4 ist ein Verdichterrad 8 angeordnet. Am entgegengesetzten, nicht dargestellten Ende der Welle 4 ist ein Turbinenläufer angeordnet

Das Verdichterrad 8 ist in einem Verdichterraum 10 angeordnet und von einem Verdichtergehäuse 12 umgeben, in welchem ein nicht dargestellter axialer Einlass und ein tangentialer Auslass 14 in bekannter Weise ausgebildet sind. Das Verdichtergehäuse 12 wird beispielsweise über Spannbänder am Lagergehäuse 2 befestigt.

Das Lagergehäuse 2 weist an seinem zum Verdichtergehäuse 12 weisenden Ende eine gestufte Bohrung 16 auf, in der eine Dichtungsanordnung 18 zur Vermeidung eines Eindringens von Öl in das Verdichtergehäuse 12 angeordnet ist.

Diese Dichtungsanordnung 18 weist einen Lagergehäusedeckel 20 auf, der in der Bohrung 16 unter Zwischenlage eines Dichtrings 22 in einer ringförmigen Radialnut 24, die am Außenumfang des Lagergehäusedeckels 20 ausgebildet ist, mittels eines Sicherungsringes 26 befestigt ist. Der Sicherungsring 26 wird in eine im Lagergehäuse 2 ausgebildete Innenumfangsnut 28 geklemmt und drückt auf diese Weise den Lagergehäusedeckel 20 gegen einen Absatz 30 des Lagergehäuses 2, wodurch der Lagergehäusedeckel 20 im Lagergehäuse 2 fixiert wird.

An seinem radial inneren Bereich ist am Lagergehäusedeckel 20 ein sich axial erstreckendender Ring 32 ausgebildet, der einen sich axial erstreckenden Bereich 33 einer Dichtungsbuchse 34 radial umgibt. Am Außenumfang des sich axial erstreckenden Bereiches 33 der Dichtungsbuchse 34 sind zwei ringförmige Radialnuten 36 ausgebildet, in denen jeweils ein Kolbenring 38 angeordnet ist, wobei unter ringförmiger Radialnut im Folgenden jeweils eine Nut zu verstehen ist, die in radialer Richtung ausgebildet ist und sich über einen Umfang erstreckt. Entsprechend wird im Folgenden unter ringförmiger Axialnut eine Nut verstanden, die in axialer Richtung ausgebildet ist und sich über einen Umfang erstreckt. Die Kolbenringe 38 dienen zur Abdichtung des Spaltes zwischen dem sich axial erstreckenden Ring 32 des Lagergehäusedeckels 20 und dem sich axial erstrekkenden Bereich 33 der Dichtungsbuchse 34.

Die Dichtungsbuchse 34 ist fest auf der Welle 4 angeordnet und dreht sich mit dieser mit. An den sich axial erstreckenden Bereich der Dichtungsbuchse 34 schließt sich eine sich radial erstreckende Wand 40 der Dichtungsbuchse 34 an, deren erste axial begrenzende Wandfläche zum Lagergehäusedeckel 20 gewandt ist und deren zweite axial begrenzende Wandfläche zu einem Axiallager 42 gewandt ist. An einer Außenumfangsfläche 52 dieser sich radial erstreckenden Wand 40 ist eine Radialnut 44 ausgebildet, in die ein radialer Innenumfang 46 eines Ölabweisblechs 48 ragt. Ein äußerer Umfang 50 des Ölabweisblechs 48 ist zwischen dem Lagergehäusedeckel 20 und dem Axiallager 42 festgeklemmt.

Die Außenumfangsfläche 52 der sich radial erstreckenden Wand 40 der Dichtungsbuchse 34 weist an der zum Axiallager42 gelegenen Seite einen geringeren Durchmesser auf als an der zur Radialnut 44 entgegengesetzten, zum Lagergehäusedeckel 20 weisenden Seite.

Zusätzlich ist an der zum Lagergehäusedeckel 20 weisenden Seite der sich radial erstreckenden Wand 40 der Dichtungsbuchse 34 eine ringförmige Axialnut 54 ausgebildet, in die ein axiales Ende 56 des sich axial erstreckenden Ringes 32 des Lagergehäusedeckels 20 ragt. Die Axialnut 54 wird von dem axialen Ende 56 des sich axial erstreckenden Ringes 32 weitestgehend ausgefüllt, wobei ein Spalt zwischen den Innenwänden der Axialnut 54 und den Außenwänden des sich axial erstrekkenden Ringes 32 verbleibt. An das axiale Ende 56 des sich axial erstreckenden Ringes 32 schließt sich eine Radialnut 58 an, die auf der Außenumfangsfläche sich axial erstreckenden Ringes 32 ausgebildet ist. Diese Radialnut 58 geht in eine im Wesentlichen vertikal zur Drehachse verlaufende Wand 60 des Lagergehäusedeckels 20 über.

Die Dichtungsbuchse 34 liegt mit ihrem zum Verdichterrad 8 entgegengesetzten Ende gegen einen Lagerbund 62 an, der ebenfalls fest auf der Welle 4 angeordnet ist und mit dieser rotiert. Der Lagerbund 62 weist ebenfalls eine im Wesentlichen axiale Erstreckung auf und liegt an seiner gegenüberliegenden Seite gegen einen Absatz 64 der Welle 4 an. In diesem Bereich weist der Lagerbund 62 eine sich radial erstreckende Wand 66 auf, so dass zwischen der Wand 66 des Lagerbundes 62 und der sich radial erstreckenden Wand 40 der Dichtungsbuchse 34 ein Zwischenraum entsteht, in welchem ein radial innerer Bereich 64 des Axiallagers 42 angeordnet ist. Dieses Axiallager 42 weist zu den sich radial erstreckenden Wänden 40, 66 weisende Schmierflächen auf, die eine Drehung der Dichtungsbuchse 34 beziehungsweise des Lagerbundes 62 gegenüber dem Axiallager 42 ermöglichen, welches mit seinem radial äußeren Bereich 67 zwischen dem Ölabweisblech 48 und einem Absatz 68 im Lagergehäuse 2 festgeklemmt ist. Zur Erzeugung der Schmierflächen sind geringfügige Spalten 70 zwischen dem Axiallager 42 und den sich radial erstreckenden Wänden 40, 66 ausgebildet.

Über im Lagergehäuse 2 angeordnete Bohrungen 72 werden die Radiallager 6 sowie das Axiallager 42 mit Öl zur Schmierung der Lager 6, 42 versorgt. Dieses Öl gelangt über die Spalten 70 durch den im Betrieb des Turboladers entstehenden Öldruck in einen Raum 74 zwischen dem Ölabweisblech 48 und dem Axiallager 42. Der Hauptteil dieses Öles wird über das Ölabweisblech 48 in einen nicht dargestellten geodätisch tiefer liegenden nicht dargestellten Ölsammelraum des Lagergehäuses 2 abgeleitet. Eine Restmenge des Öls tropft in die Radialnut 44. Bei Betrieb des Turboladers wird diese Restölmenge nach außen geschleudert, so dass ein Teil in einen Raum 76 zwischen Ölabweisblech 48 und Lagergehäusedeckel 20 gefördert wird. Insbesondere bei Stillstand des Turboladers wird der größte Teil dieser Ölmenge aufgrund des geringeren Durchmessers der Außenumfangsfläche 52 an der zum Axiallager 42 gelegenen Seite im Vergleich zur zur Radialnut 44 entgegengesetzten Seite wiederum zum Ölsammelraum gelangen.

Das im Betrieb in den Raum 76 gelangende Öl fließt zum größten Teil entlang der zum Ölabweisblech 48 gerichteten und entsprechend ausgeformten Innenwände 60, 78 des Lagergehäusedeckels 20 ebenfalls in den Ölsammelraum ab oder gelangt über die Innenwände 60,78 in die Radialnut 58, von wo aus es ebenfalls zum Ölsammelraum abgeführt wird.

Wird der Turbolader nach dem Eindringen von Öl in den Raum 76 beziehungsweise auf die zum Lagergehäusedeckel 20 weisende Umfangsfläche 52 abgestellt, fließt dieses Öl entweder in Richtung der Radialnut 44 oder in Richtung der Radialnut 58, von wo es wiederum in den Ölsammelraum abgeführt wird. Durch die vorhandene Ausbildung der Radialnuten 44,58 sowie der Anordnung des Ölabweisblech 48 wird sichergestellt, dass die in der Nut 58 vorhandene Ölmenge immer so gering bleibt, dass ein Eindringen in den Spalt zwischen der Axialnut 54 der Dichtungsbuchse 34 und dem sich axial erstreckenden Ring 32 des Lagergehäusedeckels 20 verhindert wird, da die Füllhöhe der Radialnut 58 immer unterhalb des Spaltes ist. Sollte dennoch Öl in den Spalt eindringen, wird dieses durch die Kolbenringe 38 daran gehindert, in den Verdichterraum 10 einzudringen.

Die vorliegende Dichtungsanordnung ist entsprechend geeignet, ein Eindringen von Öl aus dem Lagergehäuseraum in den Verdichterraum zuverlässig zu verhindern und gleichzeitig eine ausreichende Schmierung sicherzustellen, wobei durch die vorgesehenen Spalte zwischen den sich drehenden Teilen und den feststehenden Teilen ein größerer Verschleiß ausgeschlossen wird, so dass eine hohe Lebensdauer sichergestellt werden kann.

Es sollte deutlich sein, dass geringfügige Änderungen innerhalb des Hauptanspruches denkbar sind. So kann beispielsweise die Teilung der Dichtungsbuchse und des Lagerbundes in anderer Weise erfolgen oder die Form der Innen- und Außenwände des Lagergehäusedeckels geändert werden.

## Patentansprüche

1. Dichtungsanordnung für die Verdichterseite eines Turboladers einer Verbrennungskraftmaschine mit einer Welle (4), auf der ein Verdichterrad (8) angeordnet ist,
einer Dichtungsbuchse (34), die auf der Welle (4) angeordnet ist, einem Lagergehäusedeckel (20), der radial innerhalb des Lagergehäuses (2) angeordnet ist, einen Verdichterraum (10) von einem Lagergehäuseraum (74, 76) trennt und die Dichtungsbuchse (34) zumindest teilweise umgibt, einem Lagerbund (62), der auf der Welle (4) angeordnet ist und einem Axiallager (42), welches im Lagergehäuse (2) fest angeordnet ist,
wobei der radial innere Bereich des Axiallagers (42) zwischen einer sich radial erstreckenden Wand (66) des Lagerbundes (62) und einer sich radial erstreckenden Wand (40) der Dichtungsbuchse (34) angeordnet ist, die Dichtungsanordnung ein Ölabweisblech (48) aufweist, dessen äußerer Umfang (50) zumindest teilweise zwischen dem Lagergehäusedeckel (20) und dem Axiallager (42) festgeklemmt ist und dessen Innenumfang (46) in eine Radialnut (44) an einer Außenumfangsfläche (52) der sich radial erstreckenden Wand (40) der Dichtungsbuchse (34) ragt,
**dadurch gekennzeichnet, dass** in der Dichtungsbuchse eine ringförmige Axialnut (54) ausgebildet ist, die zum Lagergehäusedeckel (20) weist und in die ein axiales Ende (56) eines sich vom Lagergehäusedeckel (20) axial erstreckenden Ringes (32) ragt, an dem angrenzend zum in die Axialnut (54) ragenden Ende (56) eine Radialnut (58) ausgebildet ist.

2. Dichtungsanordnung für die Verdichterseite eines Turboladers einer Verbrennungskraftmaschine nach Anspruch 1, **dadurch gekennzeichnet, dass** die Außenumfangsfläche (52) der sich radial erstreckenden Wand (40) der Dichtungsbuchse (34) an einer zum Axiallager (42) weisenden, an die Radialnut (44) angrenzenden axialen Seite einen geringeren Durchmesser aufweist als an einer zum Lagergehäusedeckel (20) weisenden an die Radialnut (44) angrenzenden axialen Seite.

3. Dichtungsanordnung für die Verdichterseite eines Turboladers einer Verbrennungskraftmaschine nach einem der Ansprüche 1 oder 2, **dadurch gekennzeichnet, dass** zwischen einem Innenumfang des Lagergehäusedeckels (20) und dem Außenumfang des sich axial erstreckenden Bereiches (33) der Dichtungsbuchse (34) in zwei ringförmige Radialnuten (36) der Dichtungsbuchse (34) je ein Kolbenring (38) angeordnet ist.

4. Verfahren zur Abdichtung der Verdichterseite eines Turboladers mit einer Dichtungsanordnung nach einem der Ansprüche 1 oder 2, **dadurch gekennzeichnet, dass** im Betrieb des Turboladers Öl aus einem Spalt (70) zwischen dem Axiallager (42) und der sich radial erstreckenden Wand (40) der Dichtungsbuchse (34) zunächst in einen Raum (74) zwischen dem Axiallager (42) und dem Ölabweisblech (48) geleitet wird, ein Hauptteil des Öls durch das Ölabweisblech (48) in einen Ölsammelraum im Lagergehäuse (2) des Turboladers geleitet wird, ein Rest des Öls über die Radialnut (44) zwischen dem Ölabweisblech (48) und der Dichtungsbuchse (34) in einen Raum (76) zwischen dem Ölabweisblech (48) und dem Lagergehäusedeckel (20) strömt, der Rest des Öls nach außen in Richtung des Lagergehäusedeckels (20) geschleudert wird, und daraufhin vom Lagergehäusedeckel (20) zur Radialnut (58) des Lagergehäusedeckels (20) geleitet wird, von wo aus es in den Ölsammelraum strömt.

## Claims

1. Sealing arrangement for the compressor side of a turbocharger of an internal combustion engine, comprising
a shaft (4) with a compressor wheel (8) arranged thereon,
a sealing bush (34) arranged on the shaft (4),
a bearing housing cover (20) arranged radially inside of the bearing housing (2), separating a compressor chamber (10) from a bearing housing chamber (74, 76) and surrounding the sealing bush (34) at least partly,
a bearing collar (62) arranged on the shaft (4), and
an axial bearing (42) fixedly arranged in the bearing housing (2),
wherein the radially inner portion of the axial bearing (42) is arranged between a radially extending wall (66) of the bearing collar (62) and a radially extending wall (40) of the sealing bush (34), the sealing arrangement comprising an oil baffle (48) whose outer circumference (50) is clamped at least partly between the bearing housing cover (20) and the axial bearing (42) and whose inner circumference (46) protrudes into a radial groove (44) in an outer circumferential surface (52) of the radially extending wall (40) of the sealing bush (34),
**characterized in that**
an annular axial groove (54) is formed in the sealing bush (34), which is directed to the bearing housing cover (20) and into which an axial end (56) of a ring (32) protrudes that extends axially from the bearing housing cover (20), wherein a radial groove (58) is formed at the ring (32) adjacent the end (56) protruding into the axial groove (54).

2. Sealing arrangement for the compressor side of a turbocharger of an internal combustion engine as defined in claim 1, **characterized in that** the outer circumferential surface (52) of the radially extending wall (40) of the sealing bush (34) has a smaller diameter on an axial side directed to the axial bearing (42) and adjoining the radial groove (42) than on an axial side directed to the bearing housing cover (20) and adjoining the radial groove (44).

3. Sealing arrangement for the compressor side of a turbocharger of an internal combustion engine as defined in claim 1 or 2, **characterized in that** between an inner circumference of the bearing housing cover (20) and the outer circumference of the axially extending portion (33) of the sealing bush (34) a respective piston ring (38) is arranged in two annular radial grooves (36) of the sealing bush (34).

4. Sealing Process far of the compressor side of a turbocharger of an internal combustion engine as defined in claim 1 or 2, **characterized in that**, during the operation of the turbocharger, oil is first guided from a gap (70) between the axial bearing (42) and the radially extending wall (40) of the sealing bush (34) into a chamber (74) between the axial bearing (42) and the oil baffle (48),
a major part of the oil is guided by the oil baffle (48) into an oil collection chamber in the bearing housing (2) of the turbocharger,
a rest of the oil flows into a chamber (76) between the oil baffle (48) and the bearing housing cover (20) via the radial groove (44) between the oil baffle (48) and the sealing bush (34),
the rest of the oil is flung outward towards the bearing housing cover (20),
and is thereafter guided from the bearing housing cover (20) to the radial groove (58) of the bearing housing cover (20), from where it flows into the oil collection chamber.

## Revendications

1. Ensemble joints d'étanchéité du coté compresseur d'une turbosoufflante d'un moteur à combustion, comprenant
un arbre (4) sur lequel est disposé une roue de compresseur (8),
une douille d'étanchéité (34) disposée sur ledit arbre (4),
un couvercle du boitier de palier (20) disposé radialement à l'intérieur du boitier de palier (2), séparant une chambre de compresseur (10) d'une chambre de boitier de palier (74, 76) et entourant ladite douille d'étanchéité (34) au moins partiellement, une bossage de palier (62) disposée sur ledit arbre (4), et
un palier axial (42) disposé de manière fixe dans ledit boitier du palier (2),
la partie radialement intérieure dudit palier axial (42) est disposée entre une paroi (66) radiale de ladite bossage de palier (62) et une paroi (40) radiale de ladite douille d'étanchéité (34), ledit ensemble joints d'étanchéité comprenant une tôle collectrice d'huile (48) dont la circonférence externe (50) est serrée au moins partiellement entre ledit couvercle du boitier de palier (20) et ledit palier axial (42), et dont la circonférence interne (46) s'étend dans une rainure radiale (44) formée dans une surface de circonférence externe (52) de ladite paroi radiale (40) de ladite douille d'étanchéité (34),
**caractérisé en ce qu'**
une rainure axiale annulaire (54) est formée dans ladite douille d'étanchéité (34), qui est tournée vers ledit couvercle du boitier de palier (20) et dans laquelle saille une extrémité axiale (56) d'un anneau (32) qui s'étend axialement à partir dudit couvercle du boitier de palier (20), une rainure radiale (58) est formée à ladite anneau (32) adjacent ladite extrémité (56) saillant dans ladite rainure axiale (54).

2. Ensemble joints d'étanchéité du coté compresseur d'une turbosoufflante d'un moteur à combustion selon la revendication 1, **caractérisé en ce que** la surface circonférentielle externe (54) de la paroi radiale (40) de la douille d'étanchéité (34) a un diamètre plus faible à un côté axial dirigé vers le palier axial (42) et adjacent la rainure radiale (44) qu'a un côté axial dirigé vers ledit couvercle du boitier de palier (20) et adjacent ladite rainure radiale (44).

3. Ensemble joints d'étanchéité du coté compresseur d'une turbosoufflante d'un moteur à combustion selon l'une des revendications 1 ou 2, **caractérisé en ce qu'**un segment de piston (38) respectif est disposé dans deux rainures radiales annulaires (36) de la douille d'étanchéité (34), les segments de pistons étant prévus entre la circonférence interne dudit couvercle du boitier de palier (20) et la circonférence externe de la partie axiale (33) de la douille d'étanchéité (34).

4. Procédé d'étanchement du coté compresseur d'une turbosoufflante d'un moteur à combustion avec un ensemble joints d'étanchéité selon l'une des revendications 1 ou 2, **caractérisé en ce que**, pendant l'opération de la turbosoufflante, d'huile est guidé, à partir d'une fente (70) entre ledit palier axial (42) et la paroi (40) radiale de ladite douille d'étanchéité (34), d'abord dans une chambre (74) entre ledit palier axial (42) et ladite tôle collectrice d'huile (48),
la majeure partie de l'huile est guidée par ladite tôle collectrice d'huile (48) dans une chambre de collection d'huile dans le boitier de palier (2) de la turbosoufflante,
un reste de l'huile s'écoule par la rainure radiale (44) entre ladite tôle collectrice d'huile (48) et la douille d'étanchéité (34) dans une chambre (76) entre ladite tôle collectrice d'huile (48) et ledit couvercle du boitier de palier (20),
le reste de l'huile est jeté vers l'extérieur dans la direction dudit couvercle du boitier de palier (20),
et est ensuite guidé a partir dudit couvercle du boitier de palier (20) vers la rainure radiale (58) dudit couvercle du boitier de palier (20) d'où il s'écoule dans ladite chambre de collection d'huile.
